Europäisches Patentamt

European Patent Office

Office européen des brevets

(11) Publication number: **0 265 709**
**A2**

(12) # EUROPEAN PATENT APPLICATION

(21) Application number: 87114410.1

(22) Date of filing: 02.10.87

(51) Int. Cl.⁴: **A01N 59/08** , **A61L 11/00** ,
//(A01N59/08,59:02)

(30) Priority: 25.10.86 GB 8625607

(43) Date of publication of application:
04.05.88 Bulletin 88/18

(84) Designated Contracting States:
DE ES FR GB IT SE

(71) Applicant: **Laporte Industries Limited
Hanover House 14 Hanover Square
London W1R 0BE(GB)**

(72) Inventor: **Cummerson, David Ashton
4 Pasture Drive Croft
Warrington Cheshire, WA3 7LH(GB)**
Inventor: **Baldry, Michael Gordon Charles
9 Willoughby Close Old Hall
Warrington Cheshire, WA5 5QP(GB)**
Inventor: **Lapham, David John
1, Shawell Court
Widnes Cheshire, WA8 0YE(GB)**
Inventor: **Revell, Christopher
28 Wilmot Avenue Great Sankey
Warrington Cheshire, WA5 3BJ(GB)**

(74) Representative: **ffrench-Lynch, Cecil et al
Laporte Industries Ltd., Group Patent
Department, P.O. Box 2, Moorfield Road
Widnes, Cheshire WA8 0JU(GB)**

(54) A method and composition for the treatment of bathtubs.

(57) Bathtubs and their associated pipework, particularly spa baths, can be sanitised by the use of a composition comprising an alkali metal monopersulphate, an alkali metal bromide and a suitable quantity of an acid or weak base to give a treatment pH of from 3 to 8.5 particularly preferably from 6 to 8. Spa baths may be treated by dissolving the composition in water in the bath at a temperature above 30°C and operating the spa mechanism to circulate the water through the pipework for from 2 to 20 minutes. A good kill of a broad range of organisms may be obtained.

EP 0 265 709 A2

## A method and composition for the treatment of bathtubs

This invention relates primarily to a composition and method for the disinfection of the waste and recycle pipework of domestic bathtubs, hereafter called baths, but also extends to the treatment of wash basins, showers, toilet bowls and like sanitary equipment and to the treatment of the pipework of commercial baths and spas.

Water drained from baths, or the like, after use or drained through overflow devices during use contains a substantial amount of organic matter in the form, for example, of soap residues and body residues of users which matter can in time form deposits on the interior of drainpipes or overflow pipes. Such deposits harbour a wide variety of organisms such as algae, yeasts or bacteria which themselves may add to the deposits. Some such organisms may be harmless to the users of the baths either intrinsically, or because they do not normally come into contact. Nevertheless it is a matter of general sanitary practice to provide a means for preventing or reducing the formation of such deposits or for killing such organisms as well as those which occur, for example, in toilet bowls.

There is growing use of jetted tubs or "spa baths" in which bath water is continuously, or intermittently, removed from the bath during use and is recycled under pressure through spaced orifices, possibly with the introduction of air. Domestic baths of this type are normally maintained in empty condition when not in use. Jetted tubs or spa baths may be used for relatively prolonged period for therapeutic and/or relaxation purposes. Such baths have pipework associated with the "spa" arrangement and the repeated recycle of the bath water from the bath and through this pipework can result in the return to the bath of organisms which have become established in the pipework as well as unsightly debris deriving from deposits and slimes in the pipework. In the case of spa baths, therefore, it is desirable to provide a means for disinfecting and sanitising the interior of such pipework.

To be efficaceous in the context of this invention a composition is preferably capable of killing a wide range of organisms during a relatively short contact time. It is also desirable for a bath treating composition to be efficaceous in relatively dilute solution, to be harmless to the bath user and to be relatively economic.

So far as the applicant is aware previous practice in the cleaning of domestic bath piping has involved the use of household bleach or of organic disinfectant products, for example those based on phenols.

According to the present invention there is provided a composition for use in disinfecting the waste or recycle pipework of baths, spas, showers, wash basins, toilet bowls and like sanitary equipment, the composition being a solid but fully water-soluble composition consisting essentially of a combination of an alkali metal monopersulphate, an alkali metal bromide and a quantity of a weak acid, or of a base, capable of providing a pH of from 3 to less than 8 at an aqueous dosage of 0.05 to 0.5 g/l of bromide calculated as $Br_2$ and a method of such use by dissolving said composition in water, preferably although not essentially at said dosage concentration, and contacting the surfaces to be treated with the resulting solution.

Such a composition and method, can provide a rapid and effective disinfecting action in relation to a wide range of the organisms.

In the compositions according to the invention the alkali metal monopersulphate, while it may be sodium monopersulphate, is preferably potassium monopersulphate. Potassium monopersulphate tends to be somewhat unstable in pure form and is usually commercially available in an approximate 2:1:1 molar ratio mix with potassium bisulphate and potassium sulphate for example from Interox Chemicals Limited. Such a product referred to hereafter as monopersulphate triple salt may very suitably be used in the practice of this invention. References hereafter to quantities of monopersulphate relate to the total weight of such compositions and not to the monopersulphate content thereof unless stated to be molar quantities.

The alkali metal bromide may be potassium bromide but it is preferably sodium bromide. Sodium bromide may be available as the hydrate and may be used as such but references to quantities of it hereafter are to the non-hydrated material.

In the compositions of this invention the relative proportions of alkali metal monopersulphate triple salt and alkali metal bromide are preferably from 1:1 to 1:5, particularly preferably from 1:1.5 to 1 to 3, on a molar basis.

The compositions of this invention are preferably such as to give a treatment pH, in use, of from about 3 to about 8.5. Under more alkaline conditions there may be precipitation of metals from the water, in which it is dissolved for the purpose of the treatment, in the form of hydroxides while under more acid conditions there may be corrosion of bath fittings. Particularly preferably the compositions are such as to give a treatment pH of from about 5 to about 8 particularly suitably from about 6 to about 8. The acid or weak base may be suitably selected to give the required treatment pH, the pH given by the potassium monopersulphate triple salt itself, for example, being about 4.2. The acid which may or may not be in salt form maybe, for example, boric acid or sodium sulphate. However since it is usually preferred to increase the natural pH of the composition the use of a weak base, for example an alkali metal bicarbonate or an alkali metal borate, is usually preferred.

An average bath is assumed to hold about 100-200 l of water when filled for normal use. A practically suitable dosage unit of the present composition per bath is from 10 g to 50 g, preferably from 15 g to 40 g since such a quantity can be accomodated in a normal size "sachet".

A preferred composition according to this invention to make up such a unit dosage giving a pH of about 6.15 is 12 g potassium monopersulphate triple salt 4.5 g sodium bromide and 7.5 g of sodium bicarbonate. Alternatively the sodium bicarbonate may be replaced by suitable quantities of sodium sulphate, giving a bath pH of about 3.2 or by borax ($Na_2B_4O_710H_2O$) giving a bath pH of about 8 or by boric acid giving a bath pH of about 3.2 or by other suitable acids or weak bases.

In the treatment of baths according to this invention the water is preferably maintained at above 25°C, particularly suitably at above 30°C, for example at from 30°C to 45°C. In the case of a spa bath, it is convenient to treat the bath installation by dissolving the composition of this invention in water in the bath and to circulate the water through the installation for the required treatment duration. In the case of the treatment of other equipment such as basins or toilet bowls a solution of the composition, preferably having the requisite temperature may be introduced and be allowed to dwell therein for the requisite time and/or be discharged to waste to give excellent disinfection of traps, u-bends and the like.

It may be preferred for optimum effect to use a treatment duration of up to 20 minutes or more although since the treatment duration is under the control of the user and may vary considerably, the compositions of this invention are preferably substantially effective in shorter times which may be as little as 1 or 2 minutes.

The compositions of the present invention preferably contain restricted quantities, only, of other ingredients and particularly preferably consist, or essentially consist, of the said monopersulphate, bromide and acid or weak base ingredients. Other ingredients if present should be water-soluble and are preferably present in less than 20%, particularly preferably in less than 10%, by weight, of the total composition. Suitable non-essential other ingredients are surface active agents for example sodium lauryl sulphate, thickeners, tabletting lubricants or release agents, perfumes, or colourants. However, all such additional ingredients should have little foaming tendency and the quantity of any surface active agent should be suitably reduced; for example preferably to below 0.5% wt of the composition or may, particularly preferably, be eliminated.

According to a further aspect of the present invention the compositions thereof are preferably made up in the form of two part packs, one part containing the alkali metal monopersulphate triple salt in granular form and the other part containing the alkali metal bromide and, preferably, the weak base in granular form. Such two part packs reduce potential disadvantages and/or hazards which could accrue were the contents to become damp in storage, for example as a result of damage to the pack enclosure, and storage in damp bathroom conditions. Particularly, a mixture of the alkali metal monopersulphate triple salt and the base would tend to react with decomposition of the monopersulphate if exposed to moisture while a granular mixture of the alkali metal bromide and the triple salt could react with decomposition of the bromide.

Suitably the two part pack is in the form of a sachet of, for example, polyvinyl chloride with an internal membrane which can be ruptured to enable mixing of the contents just prior to use. Alternatively the above identified two parts of the composition may be added separately to water and mixed therein. It is also within the ambit of this invention to package the two parts of the composition, identified above, in two discrete packs and to enclose such discrete packs within a unitary outer enclosure, such as a suitable box, for supply to the user.

Alternatively the compositions may be made up in tabletted form. Such tablets have a surprisingly good resistance to decomposition, possibly by virtue of their low surface area and/or theirhigher density "skin" portion and this may be enhanced by further reducing the effective surface area by suitable water-impermeable packaging prior to use.

Such tablets which may be made in suitable dosage units, and which may be made in normal tabletting machinery involving compaction of the composition into a shaped cavity, represent a particularly preferred form of the present invention.

If made in larger compacted blocks the compositions of this invention may be immersed in, for example, toilet cisterns to provide continuous treatment by gradual dissolution.

The invention will now be illustrated by reference to the following examples thereof. Examples 13-18 and 21-28 are according to the invention and Examples 1-12, 19, 20 and 29-31 are not according to the invention and are inserted for comparative purposes.

3

In all the following Examples normal tap water, into which had been introduced standard concentrations of the identified organisms, was treated with various compositions. After a specified duration any reduction in the concentration of viable organisms was determined and expressed as a Logarithmic Reduction Factor.

The relative concentrations of viable organisms introduced into the water before and after treatment was determined in all the Examples by a count of colony forming units per cubic centimeter (c.f.u/cm$^3$) by the pour plate method using an incubation period of 3 days and an incubation temperature of 30°C.

The Examples (1-15, 17 and 18) were carried out at a temperature of 37°C and Example 16 at a temperature of 24°C. The duration of contact with the treating composition in these Examples was generally 5 minutes although some tests were conducted for other durations as indicated. The organisms selected for trial, so as to represent a broad range of types, were Escherichia coli denoted herein by the symbol E.c., Pseudomonas aeruginosa denoted herein by the symbol Ps.a., Staphylococcus aureus denoted herein by the symbol Staph.a. and Streptococcus faecalis denoted herein by the symbol Strep.f. The first two organisms are of the Gram negative type while the latter two are of the Gram positive type.

The conditions varied and the results of Examples 1-18 are set out in the following table in which KMPS denotes a commercial potassium monopersulphate product containing potassium monopersulphate, potassium bisulphate and potassium sulphate in an approximate 2:1:1 molar mixture. SLS denotes sodium lauryl sulphate and other materials are denoted by chemical formulae. The Logarathmic Reduction Factor is denoted as follows :-

--- little or no reduction i.e. a Factor below 3.7

+ + + a Reduction Factor greater than about 6 indicating a substantially complete kill.

Intermediate Reduction Factors are denoted by numbers between 3.7 and 6.0.

| Ex No | Trial Conditions | | | Log. Reduction Factor | | | |
|---|---|---|---|---|---|---|---|
| | Substance | Conc. mg/l | Time mins | E.c | Ps.a | Staph.a | Strep.f |
| 1 | KMPS | 500 | 5 | --- | --- | --- | --- |
| 2 | KMPS | 1000 | 5 | 4.5 | 3.7 | --- | --- |
| 3 | KMPS | 1500 | 5 | 4.1 | 5 | --- | --- |
| 4 | KMPS | 2500 | 5 | +++ | +++ | 3.9 | +++ |
| 5 | KMPS | 5000 | 5 | +++ | +++ | +++ | +++ |
| 6 | KMPS + NaCl | 100 0.67 | 5 | --- | --- | --- | --- |
| 7 | KMPS + NaCl | 100 2.02 | 5 | --- | --- | --- | --- |
| 8 | KMPS + NaCl | 200 2.02 | 5 | 4.6 | 4.8 | --- | --- |
| 9 | KMPS + NaCl | 1000 2.02 | 5 | 4.8 | 5 | 5 | 6 |
| 10 | KMPS + NaCl + Na$_2$CO$_3$ | 87.4 18.9 61.9 | 5 | 3.8 | --- | --- | --- |

| | | | | | | | |
|---|---|---|---|---|---|---|---|
| | + SLS | 1.8 | | | | | |
| 11 | KMPS | 87.4 | 5 | 3.9 | --- | --- | --- |
| | + NaCl | 18.9 | | | | | |
| | + NaHCO$_3$ | 61.9 | | | | | |
| | + SLS | 1.8 | | | | | |
| 12 | KMPS | 80.8 | 5 | 4.6 | --- | --- | 4.6 |
| | NaBr | 30.3 | | | | | |
| | + Na$_2$CO$_3$ | 57.2 | | | | | |
| | + SLS | 1.7 | | | | | |
| 13 | KMPS | 80.8 | 5 | +++ | 5.0 | 6.0 | +++ |
| | + NaBr | 30.3 | | | | | |
| | + NaHCO$_3$ | 57.2 | | | | | |
| | + SLS | 1.7 | | | | | |
| 14 | KMPS | 80.8 | | | | | |
| | +NaBr | 30.3 | | | | | |
| | +NaHCO$_3$ | 57.2 | | | | | |
| | +SLS | 1.7 | 5 | 5 | --- | 5 | 6 |
| 15 | (Comp. as 14) | | 5 | 6 | 4.6 | +++ | +++ |
| 16 | (Comp. as 14 – Temp. 24°C.) | | 5 | --- | --- | --- | 3.9 |
| 17 | (Comp. as 14) | | 10 | 6 | 4 | +++ | 5 |
| 18 | (Comp. as 14) | | 15 | +++ | +++ | +++ | +++ |

It can be seen from Examples 1 to 5 that while KMPS can be an effective broad spectrum biocide it requires an unacceptably high concentration to achieve this. Example 9 when compared with Example 2 shows that the addition of a small quantity of NaCl somewhat improves biocidal activity although the kill is still far from complete and the quantity of KMPS required is still large. Examples 10 to 12 are comparative and show that the identity of the base is of importance and that the use of NaBr and a suitable base, together (Ex 13), gives a biocidal activity of a different order at the low dose rate of 170 mg/l (approximately 25g/tub). Example 18 shows that a duration of 15 minutes can give a substantially complete kill. Example 16 conducted at 24°C shows the criticality of temperature in comparison with Example 14 and 15 conducted at 35°C.

Examples 19-31 were performed using cultures of other commonly occuring organisms.

Pink Yeast
White Yeast
Enterobacter sp.
Enterobacter cloacae

By introducing 10 cm³ of a culture of each of the organisms into about 150 l of water and treating the water with 170 mg/l of a mixture of KMPS, NaB$_r$ and the indicated base in the weight ratio 81.6:30.6:57.8 for the indicated time and at the indicated temperature.

The conditions varied and the results are out in the following Table.

| Ex No. | Treatment | | | Total | | Cfu.cm$^{-3}$ | |
| | Base | Temp $^\circ$C | Time | | Before | After | |
|---|---|---|---|---|---|---|
| 19 | $Na_2CO_3$ | 3 | 2 | | $2.1 \times 10^5$ | $4.0 \times 10^3$ |
| 20 | $Na_2CO_3$ | 37 | 5 | | $2.1 \times 10^5$ | $3.3 \times 10^2$ |
| 21 | $NaHCO_3$ | 37 | 2 | | $1.8 \times 10^5$ | 0 |
| 22 | $NaHCO_3$ | 37 | 5 | | $1.8 \times 10^5$ | 0 |
| 23 | $Na_2SO_4$ | 37 | 2 | | $1.7 \times 10^5$ | 0 |
| 24 | $Na_2SO_4$ | 37 | 5 | | $1.7 \times 10^5$ | 0 |
| 25 | $H_3BO_3$ | 37 | 2 | | $1.1 \times 10^5$ | 0 |
| 26 | $H_3BO_3$ | 37 | 5 | | $1.1 \times 10^5$ | 0 |
| 27 | $Na_2B_4O_710H_2O$ | 37 | 2 | | $1.0 \times 10^5$ | 0 |
| 28 | $Na_2B_4O_710H_2O$ | 37 | 5 | | $1.0 \times 10^5$ | 0 |
| 29 | $Na_2CO_3$ | 16 | 3 | | $3.3 \times 10^4$ | $>10^3$ |
| 30 | $Na_2CO_3$ | 16 | 5 | | $3.3 \times 10^4$ | $>10^3$ |
| 31 | $Na_2CO_3$ | 16 | 6 | | $3.3 \times 10^4$ | $1.6 \times 10^4$ |

These Examples confirm the effectiveness of the compositions of the present invention against a different range or organisms to those used in Examples 1 to 18. It is particularly apparent from Examples 21, 23, 25 and 27 that a substantially complete kill of some organisms may be obtained in as little as 2 minutes or, possibly, in an even shorter time.

## Claims

1. A composition for use in disinfecting the waste or recycle pipework of baths, showers, wash basins, toilet bowls and like sanitary equipment, the composition being a solid water-soluble composition consisting essentially of a combination of an alkali metal monopersulphate, an alkali metal bromide and a quantity of a weak acid, or of a base, capable of providing a pH of from 3 to less than 8 at an aqueous dosage of 0.05 to 0.5 g/l of bromide calculated as $Br_2$

2. A composition as claimed in claim 1 wherein the alkali metal monopersulphate is potassium permonosulphate in the form of its triple salt.

3. A composition as claimed in claim 1 or 2 wherein the alkali metal bromide is sodium bromide.

A composition as claimed in any preceding claim wherein the relativemolar proportions of alkali metal monopersulphate and alkali metal bromide are from 1:1 to 1:5.

5. A composition as claimed in any preceding claim wherein the relative molar proportions of alkali metal monopersulphate and alkali metal bromide are from 1:1.5 to 1:3.

6. A composition as claimed in any preceding claim wherein the quantity of weak acid or base is capable of providing a dosage pH of from 3 to 7.5.

7. A composition as claimed in claim 6 wherein the dosage pH is from 3.2 to 6.15.

8. A composition as claimed in any preceding claim wherein the weak acid or base is selected from sodium bicarbonate, sodium sulphate and boric acid.

9. A substantially non-foaming composition as claimed in any one of claims 1 to 8.

10. A composition as claimed in any one of claims 1 to 9 in the form of parts, one part containing the alkali metal monopersulphate and the other part containing the alkali metal bromide.

11. A composition as claimed in any one of claims 1 to 9 in tablet or compacted block form.

12. A method of treating baths, wash basins, toilet bowls, showers and like sanitary equipment comprising treating the said equipment with water having dissolved therein a composition as claimed in any one of claims 1 to 11.

13. A method as claimed in claim 12 wherein the concentration of the composition in the water is from 0.05 to 0.5 g/l of bromide calculated as Br.

14. A method as claimed in claim 12 wherein the treatment is conducted at a temperature of above 25°C.

15. A method as claimed in claim 12, 13 or 14 for disinfecting the pipework of a jetted tub or spa bath comprising introducing water into the bath, dosing the water with the said composition, and operating the recycle mechanism of the bath.

16. A method as claimed in claim 15 wherein the recycle mechanism is operated for at least 2 minutes.